(19) **Europäisches Patentamt**

**European Patent Office**

**Office européen des brevets**

(11) **EP 1 722 450 A1**

(12) **EUROPÄISCHE PATENTANMELDUNG**

(43) Veröffentlichungstag:
**15.11.2006 Patentblatt 2006/46**

(51) Int Cl.:
*H01S 3/00* (2006.01)    *H01S 3/08* (2006.01)
*H01S 3/06* (2006.01)    *H01S 3/067* (2006.01)
*H01S 5/00* (2006.01)    *H01S 5/20* (2006.01)
*H01L 21/20* (2006.01)   *B23K 26/073* (2006.01)
*G02B 27/09* (2006.01)   *C30B 13/24* (2006.01)

(21) Anmeldenummer: 06009450.5

(22) Anmeldetag: **08.05.2006**

(84) Benannte Vertragsstaaten:
**AT BE BG CH CY CZ DE DK EE ES FI FR GB GR
HU IE IS IT LI LT LU LV MC NL PL PT RO SE SI
SK TR**
Benannte Erstreckungsstaaten:
**AL BA HR MK YU**

(30) Priorität: **12.05.2005  EP 05010335**

(71) Anmelder: **Innovavent GmbH
37085 Göttingen (DE)**

(72) Erfinder:
• **Hollemann, Günter, Dr.
07749 Jena (DE)**

• **Heist, Peter, Dr.
07743 Jena (DE)**
• **Oesterlin, Peter, Dr.
37077 Göttingen (DE)**
• **Burghardt, Berthold, Dr. Dipl.-Phys
37161 Waake (DE)**
• **Kahlert, Hans-Jürgen, Dr.
37077 Göttingen (DE)**

(74) Vertreter: **von Hellfeld, Axel
Wuesthoff & Wuesthoff
Patent- und Rechtsanwälte
Schweigerstrasse 2
81541 München (DE)**

(54) **Anamorphotischer scheibenförmiger Festkörperlaser**

(57)    Ein Lasersystem mit einem scheibenförmigen Verstärkermedium (14), das in der Materialbearbeitung zur Erzeugung einer Strahlungslinie mit geringer Breite und gleichförmiger hoher Intensität in der Längsrichtung dient.

Die Konstruktion eines Lasers, der in zwei orthogonalen Strahlebenen unterschiedliche Modenzahlen $M^2$ aufweist, ermöglicht insbesondere auch ohne Strahlhomogenisierer eine weitestgehend homogene Intensitätsverteilung in der langen Abmessung der Strahlungslinie wenn hierfür ein Laser mit einem möglichst großen $M^2$ eingesetzt wird, während gleichzeitig zur Erzeugung einer möglichst geringen Breite der Strahlungslinie der Laser in bezug auf diese Richtung ein möglichst kleines $M^2$ aufweist. Es wird offenbart, wie eine Strahlungslinie erreicht werden kann, die in Querrichtung extrem stark fokussiert ist und somit eine hohe Intensität aufweist, während die Strahlungslinie in Richtung ihrer Längserstreckung eine möglichst homogene aber gleichwohl hohe Intensitätsverteilung hat. Dies wird erreicht, indem für die beiden genannten Richtungen jeweils im oder mit dem Laser unterschiedliche Modenzahlen eingestellt werden, also ein anamorphotischer Laser verwendet wird.

Figur 3

EP 1 722 450 A1

**Beschreibung**

Laser finden vielfältige Anwendungen in der Materialbearbeitung, insbesondere zur Erzielung von Oberflächenveränderungen.

Eine Vielzahl von industriellen Oberflächenveränderungen mit Lasern erfordern das Aufheizen oder Schmelzen der Oberfläche. Ein Beispiel für eine solche Materialbearbeitung ist das Kristallisieren von dünnen Siliziumschichten für die Herstellung von Flachbildschirmen oder Solarzellen zur Erhöhung der elektrischen Leitfähigkeit.

Ein anderes Beispiel für die Bearbeitung von oberflächennahen Schichten ist die Kristallisation von dünnen, dotierten oberflächennahen Schichten eines Siliziumwafers. Solche dotierten Schichten sind für die Funktion von Transistoren wichtig.

Die vorstehend genannten Materialbearbeitungsverfahren sind im Stand der Technik bekannt. Dabei können sowohl kontinuierliche (cw) oder gepulste Laser eingesetzt werden. Die Laserstrahlung wird über die Oberfläche bewegt. Für diese Materialbearbeitung wird die Laserstrahlung oft in eine lange und sehr schmale Linie geformt. Diese Linie hat vorzugsweise eine gleichmäßige Intensitätsverteilung in der langen Abmessung (eine Intensitätsverteilung gemäß dem sogenannten "Top-Hat" oder Kastenprofil), während die Intensitätsverteilung in der kurzen Abmessung, also quer zur Linie, in der Regel einen glockenförmigen Verlauf hat, zum Beispiel ein Gauß-Profil. Bei den Prozessen zur Materialbearbeitung, also insbesondere den eingangs genannten Kristallisationsverfahren, spielt die Intensität (Leistungsdichte) oder Energiedichte der Laserstrahlung eine entscheidende Rolle. Bei kontinuierlichen Lasern ist dies die Leistung pro Fläche, also die Leistungsdichte. Bei gepulsten Lasern ist dies die Energie pro Fläche, also die Energiedichte. In der Regel werden möglichst hohe Intensitäten verlangt und deshalb ist es wünschenswert, die Breite der Linie, also die Abmessung senkrecht zur Längserstreckung der Linie, so gering wie möglich zu halten. Häufig wird eine Breite der Linie von 10 bis 50 $\mu$m gefordert und auch noch geringere Breiten. Hierfür sind besonders Beugungsmaßzahlen $M^2$ mit einem Wert kleiner 5, im Idealfall $M^2 = 1$ geeignet.

In der langen Abmessung mit Kastenprofil kommt es auf eine möglichst homogene Intensitätsverteilung an. Wir haben gefunden, dass dies mit einem möglichst hohen $M^2$-Wert am besten erreicht werden kann auf Grund der Kohärenzeigenschaften des Lasers. Gut geeignet sind beispielsweise Laserstrahlen mit einem $M^2 > 7$, insbesondere $M^2 > 15$.

Die DE 100 04 999 A1 beschreibt einen Diodenlaser mit unterschiedlichen Modenzahlen in verschiedenen Richtungen.

Die US 2005/079645 A1 zeigt Anwendungen von Excimerlasern und der Harmonischen eines YAG-Lasers beim Kristallisieren von dünnen Siliziumschichten. Es handelt sich dort um einen besonders gestalteten Strahlhomogenisierer zur Erzeugung eines rechteckigen Strahls.

Der Erfindung liegt die Aufgabe zugrunde, einen Festkörperlaser bzw. einen Festkörperlaserverstärker zu schaffen mit guter Fokussierbarkeit in unterschiedlichen Achsen und guter Strahlhomogenisierung.

Diese Aufgabe lösende Festkörperoszillatoren und Festkörperlaserverstärker sind in den Patentansprüchen beschrieben.

Der mit dem erfindungsgemäßen Laser erzeugte Laserstrahl lässt sich zu einer extrem schmalen Linie fokussieren und behält dabei eine extrem hohe Intensität. Dies ergibt sich aus folgenden Erwägungen:

Um einen Laserstrahl zu fokussieren, ist es hilfreich, wenn der Laser auf nur wenigen räumlichen (transversalen) Moden anschwingt. Optimal ist es, wenn der Laser nur auf einer einzigen Mode schwingt (TEM$_{00}$-Mode oder auch transversaler Grundmode). Aber auch ein Laser, der auf mehreren Moden anschwingt ("low order mode"), ermöglicht die genannte Fokussierung, solange es nur wenige Moden sind. Die Größe des Fokusdurchmessers ist nämlich gegeben durch die Gleichung

$$d = 4\,f\,\lambda\,M^2 / \pi D$$

Dabei bedeuten:

d: erreichbarer Fokusdurchmesser, gemessen an den Punkten, an denen die Intensität vom Maximum auf $1/e^2$ (ca. 13,5 %) abgefallen ist,
f: Brennweite der fokussierenden Linse,
$\lambda$: Wellenlänge des Lasers,
$M^2$: Maß für die Zahl der Moden. Ein Grundmodenlaser hat $M^2 = 1$, ein Mehrmodenlaser hat typisch $M^2 = 2$ ....50, oder auch wesentlich höher,
$\pi$: Kreiszahl 3,14 ... ,
D: Durchmesser des auf die Fokussierlinse auftreffenden Strahls, gemessen an der Abmessung, an der die Intensität vom Maximum auf $1/e^2$ abgefallen ist.

Die obige Gleichung zeigt, dass die Zahl der räumlichen Moden, die durch den Wert $M^2$ repräsentiert ist, einen großen Einfluss auf den erreichbaren Fokusdurchmesser hat. Zum Beispiel kann mit einem Laser, der bei der Wellenlänge 515 nm emittiert (zum Beispiel ein frequenzverdoppelter Yb:YAG-Laser) und dessen Strahl einen Durchmesser D von 5 mm hat, ein Fokusdurchmesser von etwa 66 $\mu$m erreicht werden, wenn der Laser eine Modenzahl $M^2 = 10$ aufweist und die Fokussierlinse eine Brennweite von 50 mm hat. Eine solche Breite ist größer als der üblicherweise geforderte Wert von 10-50 $\mu$m.

Theoretisch ließe sich der Fokusdurchmesser verringern, indem die Brennweite der Linse verringert wird (f wird kleiner) oder der Strahl vor der Linse aufgeweitet wird (D wird größer). In der Praxis sind dem jedoch Grenzen gesetzt. Kleinere Brennweiten als 50 mm sind nicht praktikabel, da dann die fokussierende Linse zu dicht an dem zu bearbeitenden Werkstück sitzt und durch Partikel oder Dämpfe, die bei der Laserbearbeitung entstehen, schnell verschmutzen könnte. Der Strahldurchmesser D lässt sich in der Regel auch nicht wesentlich vergrößern, da sonst die fokussierende Linse starke sphärische Abberationen aufweist (also Fokussierfehler) oder man ein sehr komplexes Linsensystem mit hoher numerischer Apertur (also große Eintrittsöffnungen) verwenden muss, was den apparativen Aufwand erhöht. Außerdem verringert sich die Tiefenschärfe bei einer hohen numerischen Apertur, was zusätzliche technische Probleme mit sich bringt.

Verwendet man aber bei einem Laser eine Modenzahl $M^2$ von zum Beispiel nur 3 bis 5, dann ließe sich beim obigen Beispiel eine Fokusgröße von 20 bis 33 $\mu$m erreichen.

Laser mit einem solchen $M^2$ (nachfolgend Modenzahl genannt) sind im Stand der Technik bekannt. Allerdings ist bei solchen Lasern die Ausgangsleistung begrenzt, zum Beispiel bei einem frequenzverdoppelten Nd:YAG oder Nd:YV04-Laser auf etwa 20 W. Der Verwendung eines solchen Lasers für die oben genannten Anwendungen steht jedoch die Forderung entgegen, dass in der anderen Abmessung der Linie, also ihrer langen Abmessung, eine möglichst gleichmäßige und hohe Intensität vorliegt. Ein Laserstrahl hat oft eine glocken- oder Gaußförmige Intensitätsverteilung. Es gibt auch Laser, die auf vielen Moden schwingen (Multimode Laser) und die eine Intensitätsverteilung mit einem mehr oder weniger flachen Maximum aufweisen. Aber auch dieses Maximum ist noch zu ungleichmäßig hinsichtlich der räumlichen Intensitätsverteilung für die oben genannten typischen Anwendungen.

Deshalb werden im Stand der Technik sogenannte Strahlhomogenisierer eingesetzt, um eine gleichmäßige Intensitätsverteilung des Laserstrahls zu erreichen. Strahlhomogenisierer beruhen in der Regel auf dem Prinzip, dass der eintretende Laserstrahl in viele Teilstrahlen (zum Beispiel 3 bis 20 Teilstrahlen) aufgeteilt wird und diese Teilstrahlen räumlich überlagert werden. Dabei tritt der Effekt auf, dass die Teilstrahlen miteinander interferieren, d.h. sie wechselwirken in der Weise miteinander, dass es zu räumlich unterschiedlichen Intensitätserhöhungen und -verminderungen kommt. Diese Interferenz führt zu einer sehr ungleichmäßigen Intensitätsverteilung, also genau nicht zu dem gewünschten Effekt. Dabei sind die durch Interferenz erzeugten räumlichen Intensitätsschwankungen abhängig von der Kohärenz der Laserstrahlung und diese ist wiederum abhängig von der Anzahl der Moden, auf denen der Laser schwingt. Generell gilt, dass die räumliche Kohärenz umso kleiner ist (und damit auch die Stärke der Intensitätsschwankung), je mehr transversale Modenordnungen im Laser anschwingen, je größer also das $M^2$ ist.

Eine weitere Maßnahme zur Verringerung der störenden Interferenz ist die Verringerung der zeitlichen Kohärenz der Strahlung. Der Laser soll also in einem möglichst breiten Spektralbereich anschwingen. Auch zu diesem Zweck sind Yb:YAG oder andere Yb-dotierte Kristalle besonders gut geeignet auf Grund des breiten Verstärkungsspektrums von mehreren nm. Das Spektrum kann durch die Wahl eines Etalons stabilisiert und verändert werden. Beispielsweise kann man durch Verwendung eines 50 $\mu$m dicken Quarz-Etalons ein etwa 0,3 nm breites Emissionsspektrum erreichen, das in Abhängigkeit vom Einfallswinkel, unter dem das Etalon einjustiert wird, eine vorwählbare Schwerpunkt-Frequenz auswählt. Dieses Spektrum ist für die Homogenisierung vorteilhaft gegenüber dem etwa 0,03-0,1 nm breiten Spektrum eines vergleichbaren Nd:YAG-Lasers.

Die erfindungsgemäße Lösung des Problems, also die Konstruktion eines Lasers, der in zwei orthogonalen Strahlebenen unterschiedliche Modenzahlen $M^2$ aufweist, ermöglicht insbesondere auch ohne Strahlhomogenisierer eine weitestgehend homogene Intensitätsverteilung in der langen Abmessung der Strahlungslinie wenn hierfür ein Laser mit einem möglichst großen $M^2$ eingesetzt wird, während gleichzeitig zur Erzeugung einer möglichst geringen Breite der Strahlungslinie der Laser in bezug auf diese Richtung ein möglichst kleines $M^2$ aufweist. Die Erfindung lehrt also, wie eine Strahlungslinie erreicht werden kann, die in Querrichtung extrem stark fokussiert ist und somit eine hohe Intensität aufweist, während die Strahlungslinie in Richtung ihrer Längserstreckung eine möglichst homogene aber gleichwohl hohe Intensitätsverteilung hat. Dies wird erreicht, indem für die beiden genannten Richtungen jeweils im oder mit dem Laser unterschiedliche Modenzahlen eingestellt werden, also ein anamorphotischer Laser verwendet wird.

Der erfindungsgemäße Festkörperlaseroszillator bzw. Festkörperlaserverstärker zeichnet sich dadurch aus, dass das Lasermedium zwar rotationssymmetrisch sein kann (oder auch quadratisch, rechteckig oder elliptisch), jedoch durch Wahl eines konstruktiven Mittels (zum Beispiel eines Zylinderspiegels) ein verschiedenes $M^2$ in x- und y-Richtung (d.h. senkrecht zur Strahlführung im Resonator) erzeugt wird. Das hohe $M^2$ führt aufgrund der damit verbundenen Kohärenzeigenschaften zu einem wesentliche verbesserten Homogenisierungsergebnis, während in der sowieso "guten" Achse die gute Fokussierbarkeit erhalten bleibt. Eine solche Wirkung kann durch resonatorexterne Mittel (wie zum Beispiel Homogenisierer des beschriebenen Standes der Technik) nicht erreicht werden, da dort die Strahlung aufgrund der Kohärenzeigenschaften interferieren kann. Die vorliegende Erfindung zeichnet sich also aus durch eine rotationssymmetrische oder nahezu rotationssymmetrische Gain-Anordnung, wie zum Beispiel bei einem Scheibenlaser. Eine ähnliche Wirkung kann zwar auch mit einer extrem asymmetrischen Gain-Geometrie erzielt werden, wie zum Beispiel bei einem Diodenlaser, Slab-Laser oder einem Excimerlaser, jedoch hat dies dort die beschriebenen Nachteile hinsichtlich Wellenlänge, Strahlqualität, Kompaktheit und Strahl- sowie Pulsstabilität.

Gemäß einer bevorzugten Ausgestaltung der Erfindung hat der verwendete Laser in einer ersten Richtung eine Modenzahl $M^2$ von 7 oder größer, während er in einer zweiten, orthogonalen Richtung eine Modenzahl $M^2$ von 7 oder kleiner oder bevorzugt 5 oder kleiner aufweist. In der Fachsprache werden sie häufig als die "tangentiale" und " saggitale" Ebene des Strahls bezeichnet.

Um die für die Anwendung notwendigen hohen Intensitäten zu erreichen, kann man zum Beispiel einen Yb:YAG-Scheibenlaser verwenden. Yb:YAG-Scheibenlaser sind bekannt für die hohe Strahlqualität bei hohen Ausgangsleistungen. Um Strahlung im grünen Spektralbereich zu erzeugen, die besonders gut in Silizium absorbiert wird, kann mittels resonatorinterner SHG (Frequenzverdopplung) eine Wandlung der Frequenz der emittierten Strahlung in den sichtbaren Spektralbereich vorgenommen werden.

Ein solcher Laser, mit dem eine Linie der eingangs beschriebenen Art mit gleichmäßiger Intensitätsverteilung in der einen und einer möglichst geringen Abmessung in der anderen Richtung erzeugbar ist, kann zum Beispiel ein anamorphotisches aktives Medium und/oder einen anamorphotischen Resonator besitzen. Ein anamorphotischer Laserresonator hat zumindest ein anamorphotisches optisches Element. Das kann zum Beispiel ein Zylinderspiegel, eine Zylinderlinse, ein Prisma, eine Spaltblende oder ein Astigmatismus-erzeugendes Element, wie eine schräggestellte Planparallelplatte. Es können auch andere anamorphotische Komponenten eingesetzt werden oder mehrere gleiche oder unterschiedliche Komponenten zu diesem Zweck. Auch kann das aktive Lasermedium selbst unterschiedliche räumliche Eigenschaften in den beiden Achsen senkrecht zur Strahlungsausbreitungsrichtung aufweisen. Gemeinsam ist den hier beschriebenen Lasersystemen, dass ein Laserstrahl erzeugt und verwendet wird, der in der einen Achse senkrecht zur Ausbreitungsrichtung des Strahl ein kleines $M^2$ aufweist, zum Beispiel 7 oder kleiner, und in der anderen Achse senkrecht zur Ausbreitungsrichtung ein großes $M^2$, zum Beispiel 7 oder größer.

Ein anamorphotisches laseraktives Medium wäre zum Beispiel ein Scheibenlaser-Kristall, der mit einem runden oder elliptischen Querschnitt gepumpt wird oder nur in einem runden oder elliptischen Bereich auf der Scheibe mit laseraktiven Ionen dotiert ist.

Die Strahlung eines solchen Lasers kann sehr effizient zur Durchführung von Oberflächenmodifikationen benutzt werden. Bei herkömmlichen Lasern muss hingegen ein großer Teil der Strahlungsleistung vernichtet (ausgeblendet) werden, um die gewünschte Strahleigenschaft zu erreichen. Die Erfindung ermöglicht somit einen hohen Nutzungsgrad der mit dem Laser erzeugten Lichtleistung.

Bekannt sind Excimerlaser oder C02-Laser, die aufgrund der Geometrie ihres Anregungsprofils typischerweise einen anamorphotischen Strahl emittieren, jedoch ist der Betrieb von Excimerlasern mit der Handhabung giftiger Gase verbunden und seine UV-Strahlung führt zur Degradations- und Kontaminationsproblemen. Deshalb wird die vorliegende Erfindung bevorzugt auch eingesetzt bei Lasern, die langwelliger als im UV-Bereich emittieren, zum Beispiel im sichtbaren Bereich, insbesondere im grünen Bereich. C02 Laser emittieren bei Wellenlängen von 10 μm und sind aus diesem Grund nicht geeignet.

Der Stand der Technik kennt seit einigen Jahren diodengepumpte Festkörperlaser in Slab-Anordnung, wie Keming Du, Nianle Wu, Jiandong Xu, J. Giesekus, P. Loosen, R. Poprawe, "Partially endpumped Nd:YAG slab laser with a hybrid resonator", Optics Letters 23, pp. 370-372 (1998). Slab-Laseranordnungen gemäß dem Stand der Technik sind zwar geeignet zur Erzeugung anamorphotischer Laserstrahlung, jedoch weisen sie prinzipiell bedingte Nachteile auf, nämlich die Neigung zum Anschwingen parasitärer Oszillationen aufgrund der hohen Verstärkung im Slab-Laserkristall und die Neigung zu Strahlrichtungsinstabilitäten. Weiterhin sind herkömmliche Slab-Laser grundsätzlich aufwändig hinsichtlich der Justierung.

Die Erfindung lehrt deshalb den Aufbau von Scheibenlasern, die in zur Strahlausbreitungsrichtung orthogonalen Achsen unterschiedliche Modenzahlen $M^2$ aufweisen. Scheibenlaser mit einem anamorphotischen Resonator zur Erzeugung von Strahlung, die in einer ersten Richtung eine Modenzahl $M^2$ von 7 oder größer und in einer zweiten Richtung eine Modenzahl $M^2$ von 7 oder kleiner aufweisen.

Die Erfindung lehrt auch ein Scheibenlasersystem mit einem Verstärker zur resonatorexternen Erzeugung von Laserstrahlen, die in einer ersten Richtung eine Modenzahl $M^2$ von 7 oder größer und in einer zweiten Richtung eine Modenzahl $M^2$ von 7 oder kleiner aufweisen.

Nachfolgend werden Ausführungsbeispiele der Erfindung anhand der Zeichnung näher beschrieben. Es zeigt:

Figur 1     ein linienförmiges Strahlprofil

Figur 2     ein erstes Ausführungsbeispiel eines Lasersystems zur Erzeugung einer schmalen Strahlungslinie;

Figur 3     ein zweites Ausführungsbeispiel eines Lasersystems zur Erzeugung einer schmalen Strahlungslinie;

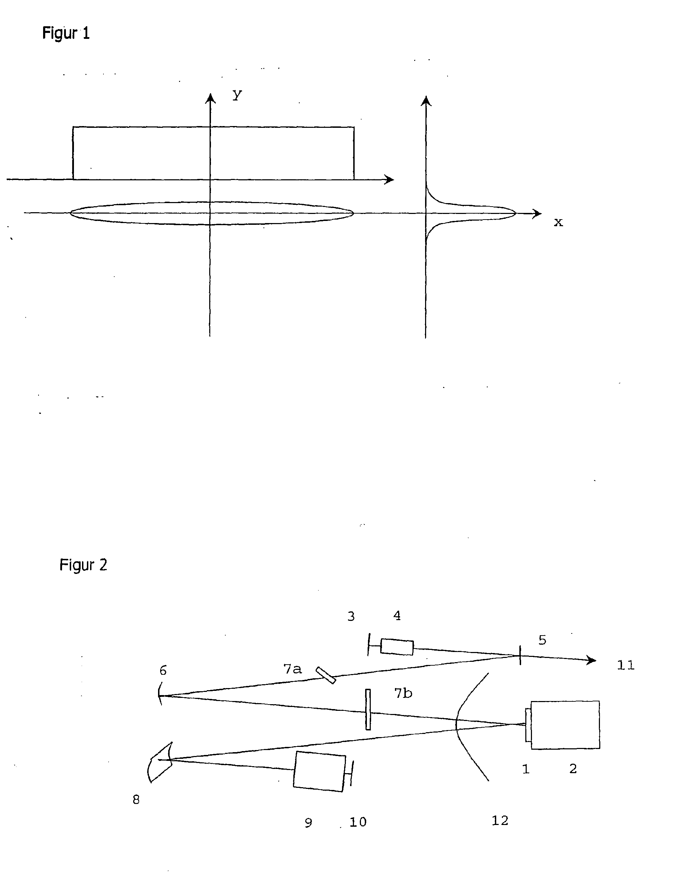

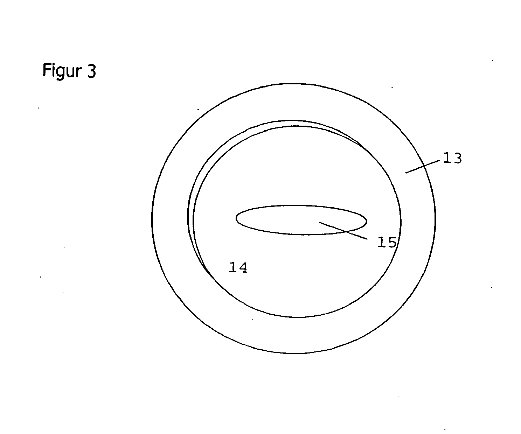

Beim Ausführungsbeispiel nach Figur 2 und 3 wird das Prinzip des Scheibenlasers eingesetzt. Dies ist zum Beispiel bekannt aus US-PS 5,553,088. Ein wesentlicher Vorteil solcher Scheibenlaseranordnungen liegt darin, dass durch die Auslegung des Laserkristalls als dünne Scheibe keine Probleme mit einer thermischen Linse entstehen und dadurch hohe Leistungen bei hoher Strahlqualität und damit hohe Intensitäten erreicht werden.

Die bekannten Laserresonatoren unter Verwendung dieses Prinzips erzeugen in der Regel ein symmetrisches Strahlprofil. Durch die hohe Kohärenz der Strahlung ist ein solcher Laser wenig geeignet für die Strahlhomogenisierung.

Bei der Anordnung gemäß Figur 2 wird der Scheibenlaser mit einem anamorphotischen Resonator zur Erzeugung anamorphotischer Strahlung verknüpft. Im einzelnen:

Gemäß Figur 2 ist eine Laserkristallscheibe 1 wärmeleitend mit einer Wärmesenke 2 aus zum Beispiel Kupfer oder Kupfer-Wolfram verbunden. Ein Parabolspiegel 12 dient als sogenannte Pumpoptik für den Laser. Der Laserresonator wird durch Endspiegel 3 und 10 definiert. Im Resonator ist ein Güteschalter 9 angeordnet, zum Beispiel ein AOM oder eine Pockelszelle. Eine Brewsterplatte 7a dient zur Polarisation der infraroten Strahlung im Resonator für die Frequenzwandlung. Ein Etalon 7b (zum Bespiel 50 - 200 $\mu$m dick) dient zur Einengung und Stabilisierung des longitudinalen Modenspektrums. Das Etalon ist zum Beispiel aus Quarzglas.

Ein Zylinderspiegel 8 dient zur Erzeugung eines anamorphotischen Resonators und somit der Erzeugung von Laserstrahlung, die in verschiedenen, zu ihrer Ausbreitungsrichtung senkrechten Richtungen unterschiedliche Modenzahlen $M^2$ aufweist. Genauso gut kann ein anderes optisches Element, zum Beispiel eine Zylinderlinse oder ein Prisma verwendet werden. Der Zylinderspiegel 8 wird so angeordnet, dass der Krümmungsradius in der (horizontalen) Tangentialebene liegt.

In der Tangentialebene (= Zeichenebene) bildet sich dadurch eine kleinere Grundmode-Strahltaille ($TEM_{00}$-Strahltaille) als in der dazu senkrechten Sagittalebene. Dadurch entsteht bei einem kreisförmigen Pumpfokus in der Scheibe in der Tangentialebene eine mehrmodige Strahltaille mit einer höheren Modenordnung als in der Sagittalebene.

Beispielsweise entsteht bei einem Pumpfokus von 4 mm und einer TEM00-Strahltaille mit einem Durchmesser von 1,0 mm (tangential) x 1,8 mm (sagittal) eine Beugungsmaßzahl $M^2$ von etwa 15 x 5.

In der vorstehend beschriebenen Anordnung wird der Scheibenlaser mit einem anamorphotischen Resonator zur Erzeugung der anamorphotischen Strahlung verknüpft. Dies geschieht durch die genannten Zylinderoptik, also zum Beispiel eine Zylinderlinse oder einen zylindrischen Spiegel, eine unter einem Einfallswinkel ungleich Null angeordnete Planparallelplatte, einen schrägen Einfall der Strahlung auf einen sphärisch gekrümmten Faltspiegel oder auf ein prismatisches Element. Dabei wird die Zweite Harmonische resonatorintern, also mit hoher Wandlungseffektivität erzeugt, ohne die bei resonatorexterner Verdopplung notwendigen hohen Leistungsdichten zu benötigen.

Dabei ist ein Vorteil des mit dem anamorphotischen Resonator verbundenen elliptischen Strahlquerschnittes im LBO-Kristall, dass die Walk-Off-Ebene im Kristall bei kritischer Winkelphasenanpassung in die große Halbachse des elliptischen Strahlprofils gelegt werden kann. Dies ergibt gleichzeitig eine hohe Wandlungseffizienz bei hohen Leistungen, aber Leistungsdichten weit unterhalb den Zerrstörungsschwellen des Kristalls.

Eine analoge Anordnung kann auch für Scheibenlaserverstärker verwendet werden.

Das Ausführungsbeispiel eines Lasersystems gemäß Figur 3 unterscheidet sich vom Ausführungsbeispiel nach Figur 2 dadurch, dass das Gainmedium anamorphotisch ist. In der Scheibe 14 wird ein elliptischer Pumpquerschnitt 15 gewählt und die Scheibe wird in einem symmetrischen Resonator oder ein anamorphotischen Resonator so angeordnet, dass durch die besondere Wahl des Pumpquerschnitts in der Scheibe ein anamorphotischer Strahl entsteht. 13 bezeichnet eine Wärmesenke.

Ein solcher Resonator kann zum Beispiel ein Resonator ähnlich Figur 2 sein, aber mit einem Planspiegel oder einem sphärischen Resonatorspiegel statt des Zylinderspiegels. Die Auswahl der Krümmungsradien und Abstände der Spiegel wird entsprechend so gewählt, dass die gewünschten Strahldurchmesser in den optischen Elementen vorliegen.

Beispielsweise bei einem elliptischen Pumpfokus von 4 mm x 2,2 mm und einem rotationssymmetrischen $TEM_{00}$-Strahldurchmesser auf der Scheibe von 1,0 mm hat der Laser eine Beugungsmaßzahl von $M^2 = 15$ in der Ebene der 4 mm Achse der Pump-Ellipse und $M^2 = 5$ in der Ebene der 2,2 mm Achse der Ellipse.

Auch mit einer Spaltblende oder mit einer Scheibe, die nur in einem elliptischen Bereich dotiert ist, kann eine vergleichbare Wirkung erzielt werden.

Figurenlegende:

1    Yb:YAG-Scheibe
2    Wärmesenke
3    Erster Endspiegel HR 515nm/HR 1030 nm
4    LBO-Kristall
5    Dichroitischer Auskoppler
6    Sphärischer Spiegel
7    a) Brewsterplatte (Polarisator) b) Dünnes Etalon
8    Zylinderspiegel
9    AOM oder Pockelszelle
10   Zweiter Endspiegel HR 1030 nm
11   SHG-Ausgangsstrahl
12   Parabolspiegel
13   Wärmesenke
14   Laserkristallscheibe
15   Elliptischer Pumpfokus

**Patentansprüche**

1. Festkörperlaseroszillator oder Festkörperlaserverstärker mit einem scheibenförmigen Verstärkermedium, der in verschiedenen Richtungen senkrecht zur Strahlungsrichtung unterschiedliche Modenzahlen $M^2$ aufweist.

2. Laseroszillator oder Laserverstärker nach Anspruch 1, **dadurch gekennzeichnet, dass** der Laser in einer ersten Richtung eine Modenzahl $M^2$ von 7 oder größer und in einer zweiten orthogonalen Richtung eine Modenzahl $M^2$ von 7 oder kleiner aufweist.

3. Laseroszillator oder Laserverstärker gemäß einem der vorhergehenden Ansprüche, wobei der Laseroszillator oder Laserverstärker zumindest ein anamorphotisches optisches Element aufweist.

4. Laseroszillator oder Laserverstärker, nach vorhergehenden Ansprüchen, wobei der Laser ein anamorphotisches aktives Lasermedium aufweist.

5. Laseroszillator oder Laserverstärker nach einem der vorhergehenden Ansprüche, mit einem anamorphotischen Resonator zur Erzeugung anamorphotischer Strahlung.

6. Laseroszillator oder Laserverstärker nach einem der vorhergehenden Ansprüche, mit einer Zylinderoptik.

7. Laseroszillator oder Laserverstärker, nach einem der vorhergehenden Ansprüche mit einer resonatorintern erzeugten zweiten Harmonischen.

8. Laseroszillator oder Laserverstärker nach einem der vorhergehenden Ansprüche mit elliptischem Strahlquerschnitt in einem NLO-Kristall.

9. Laseroszillator oder Laserverstärker nach einem der vorhergehenden Ansprüche mit einer resonatorexternen Erzeugung eines anamorphotischen Strahls in einem Laserverstärker.

10. Laseroszillator oder Laserverstärker nach einem der vorhergehenden Ansprüche mit einem Etalon, so dass dies spektrale Linienbreite > 0,1 nm beträgt.

11. Scheibenlaser mit einem anamorphotischen Resonator zur Erzeugung von Strahlung, die in einer ersten Richtung eine Modenzahl $M^2$ von 7 oder größer und in einer zweiten Richtung eine Modenzahl $M^2$ von 7 oder kleiner aufweist.

12. Scheibenlasersystem mit einem Verstärker zur resonatorexternen Erzeugung von Laserstrahlen, die in einer ersten Richtung eine Modenzahl $M^2$ von 7 oder größer und in einer zweiten Richtung eine Modenzahl $M^2$ von 7 oder kleiner aufweist.

Figur 1

Figur 2

Figur 3

**Europäisches Patentamt**

# EUROPÄISCHER RECHERCHENBERICHT

Nummer der Anmeldung

EP 06 00 9450

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 01/22541 A (JENOPTIK AKTIENGESELLSCHAFT; HOLLEMANN, GUENTER; MENDLER, WOLFRAM; BEI) 29. März 2001 (2001-03-29) * Seite 8, Zeile 30 - Seite 9, Zeile 15 * * Seite 12, Zeile 12 - Seite 13, Zeile 15 * * Abbildung 5 * ----- | 1,3-8 | INV. H01S3/00 H01S3/08 H01S3/06 H01S3/067 H01S5/00 H01S5/20 H01L21/20 B23K26/073 G02B27/09 C30B13/24 |
| X | ERHARD S ET AL: "NOVEL PUMP DESIGN OF YB:YAG THIN DISC LASER FOR OPERATION AT ROOM TEMPERATURE WITH IMPROVED EFFICIENCY" OSA TOPS ON OPTICAL AMPLIFIERS AND THEIR APPLICATIONS, Bd. 26, 1999, Seiten 38-44, XP000980115 * das ganze Dokument * ----- | 1 | |
| X | HUEGEL H ET AL: "SOLID STATE THIN DISC LASER" PROCEEDINGS OF THE SPIE, SPIE, BELLINGHAM, VA, US, Bd. 3574, 31. August 1998 (1998-08-31), Seiten 15-28, XP001156738 ISSN: 0277-786X * das ganze Dokument * ----- | 1 | |
| A | US 6 259 711 B1 (LAURELL FREDRIK) 10. Juli 2001 (2001-07-10) * Spalte 5, Zeile 1 - Zeile 16 * ----- -/-- | 1-12 | RECHERCHIERTE SACHGEBIETE (IPC) H01S G02B C30B H01L B23K |

Der vorliegende Recherchenbericht wurde für alle Patentansprüche erstellt

| Recherchenort | Abschlußdatum der Recherche | Prüfer |
|---|---|---|
| München | 26. Juli 2006 | Sauerer, C |

**Europäisches**
**Patentamt**

**EUROPÄISCHER RECHERCHENBERICHT**

Nummer der Anmeldung

EP 06 00 9450

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 100 04 999 A1 (FRAUNHOFER-GESELLSCHAFT ZUR FOERDERUNG DER ANGEWANDTEN FORSCHUNG E.V) 27. September 2001 (2001-09-27) <br> * Spalte 1, Zeile 16 - Spalte 2, Zeile 34 * <br> * Spalte 4, Zeile 4 - Zeile 26 * <br> * Spalte 7, Zeile 61 - Spalte 8, Zeile 58 * <br> * Abbildungen 2,5a,5b * <br> ----- | 1-12 | |
| A | US 2005/079645 A1 (MORIWAKA TOMOAKI) 14. April 2005 (2005-04-14) <br> * Abbildungen 1,2,3A,3B * <br> * Seite 1, Absatz 2-7 * <br> * Seite 2, Absatz 22 - Seite 3, Absatz 34 * <br> * Seite 5, Absatz 67 - Seite 7, Absatz 88 * <br> ----- | 1-12 | |
| A | US 2003/142705 A1 (HACKEL LLOYD A ET AL) 31. Juli 2003 (2003-07-31) <br> * Abbildungen 3,7 * <br> * Seite 5, Absätze 46-48,50 * <br> ----- | 1-12 | RECHERCHIERTE SACHGEBIETE (IPC) |
| A | EP 1 063 049 A (MITSUBISHI DENKI KABUSHIKI KAISHA) 27. Dezember 2000 (2000-12-27) <br> * Spalte 1, Zeile 7 - Spalte 6, Zeile 3 * <br> * Spalte 7, Zeile 20 - Spalte 8, Zeile 19 * <br> * Abbildungen 1A-1D * <br> ----- | 1-12 | |

Der vorliegende Recherchenbericht wurde für alle Patentansprüche erstellt

| Recherchenort | Abschlußdatum der Recherche | Prüfer |
|---|---|---|
| München | 26. Juli 2006 | Sauerer, C |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 00 9450

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-07-2006

| Im Recherchenbericht angeführtes Patentdokument | | Datum der Veröffentlichung | Mitglied(er) der Patentfamilie | | | Datum der Veröffentlichung |
|---|---|---|---|---|---|---|
| WO 0122541 | A | 29-03-2001 | AU | 7652200 | A | 24-04-2001 |
| | | | CA | 2351409 | A1 | 29-03-2001 |
| | | | DE | 19946176 | A1 | 19-04-2001 |
| | | | JP | 2003510821 | T | 18-03-2003 |
| | | | US | 6711184 | B1 | 23-03-2004 |
| US 6259711 | B1 | 10-07-2001 | AT | 281704 | T | 15-11-2004 |
| | | | CA | 2264753 | A1 | 12-03-1998 |
| | | | DE | 69731475 | D1 | 09-12-2004 |
| | | | DE | 69731475 | T2 | 20-10-2005 |
| | | | EP | 0923799 | A1 | 23-06-1999 |
| | | | JP | 2000517481 | T | 26-12-2000 |
| | | | SE | 510442 | C2 | 25-05-1999 |
| | | | SE | 9603234 | A | 06-03-1998 |
| | | | WO | 9810497 | A1 | 12-03-1998 |
| DE 10004999 | A1 | 27-09-2001 | KEINE | | | |
| US 2005079645 | A1 | 14-04-2005 | KEINE | | | |
| US 2003142705 | A1 | 31-07-2003 | KEINE | | | |
| EP 1063049 | A | 27-12-2000 | CA | 2312223 | A1 | 25-12-2000 |
| | | | CN | 1287381 | A | 14-03-2001 |
| | | | JP | 3562389 | B2 | 08-09-2004 |
| | | | JP | 2001007045 | A | 12-01-2001 |
| | | | TW | 469539 | B | 21-12-2001 |
| | | | US | 6437284 | B1 | 20-08-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10004999 A1
- US 2005079645 A1

- US 5553088 A

**In der Beschreibung aufgeführte Nicht-Patentliteratur**

- **KEMING DU ; NIANLE WU ; JIANDONG XU ; J. GIESEKUS ; P. LOOSEN ; R. POPRAWE.** Partially end-pumped Nd:YAG slab laser with a hybrid reso-nator. *Optics Letters,* 1998, vol. 23, 370-372